# EUROPEAN PATENT APPLICATION

(11) **EP 4 660 870 A1**
(43) Date of publication of application: **10.12.2025**
(21) Application number: 24275065.1
(22) Date of filing: 03.06.2024
(51) Int. Cl.: G06F 30/27, A62C 3/00, A62C 35/60, A62C 37/00, A62C 99/00, G06F 30/28, G06F 111/10, G06F 113/08, G06F 113/14, G06F 119/02, G06F 119/08, G06F 119/14

(54) **SIMULATING A PHYSICAL PARAMETER AT AN INTERIOR OF A PIPE DURING A FIRE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a computer-implemented method of simulating a physical parameter at an interior of a pipe, wherein the pipe is arranged passing through an enclosure containing an ignition source, using computational fluid dynamics, the method comprising: providing a model of the enclosure, the pipe, the ignition source, a mesh of a fluid within the enclosure, and the fire suppression system; activating the ignition source; simulating the physical parameter at the interior of the pipe by modelling a fire propagating from the ignition source, radiation within the enclosure, soot within the enclosure, chemical species mixing within the enclosure, and turbulence of the fluid inside the enclosure, and by modelling heat transfer from the fluid in the enclosure through the pipe using a conjugate heat transfer model; activating the fire suppression system; and simulating the physical parameter at the interior of the pipe over time by additionally modelling water spray and water mist suppression within the enclosure, evaporation of water droplets within the enclosure, and water-droplets on an exterior surface of the pipe.

## Description

### FIELD

The subject-matter of the present disclosure relates to simulation methods. More specifically, the subject-matter relates to computer-implemented methods of simulating a physical parameter at an interior of a pipe. The subject-matter also relates to methods of generating training data for training a surrogate model of the simulation, training the surrogate model and a method of inference using the surrogate model.

### BACKGROUND

A fire within an enclosure can be damaging to the enclosure or objects within the enclosure, such as pipes. Testing the impact of such fires on these objects can be expensive as each test may result in damage. Therefore, simulation of such events is an essential part of designing such enclosures. However, existing simulation techniques are too inaccurate and do not provide results commensurate with the real world.

It is an aim of the present invention to address such problems and improve on the prior art.

### SUMMARY

According to an aspect of the present disclosure, there is provided a computer-implemented method of simulating a physical parameter at an interior of a pipe, wherein the pipe is arranged passing through an enclosure containing an ignition source, using computational fluid dynamics, the method comprising: providing a model of the enclosure, the pipe, the ignition source, a mesh of a fluid within the enclosure, and the fire suppression system; activating the ignition source; simulating the physical parameter at the interior of the pipe by modelling a fire propagating from the ignition source, radiation within the enclosure, soot within the enclosure, chemical species mixing within the enclosure, and turbulence of the fluid inside the enclosure, and by modelling heat transfer from the fluid in the enclosure through the pipe using a conjugate heat transfer model; activating the fire suppression system; and simulating the physical parameter at the interior of the pipe over time by additionally modelling water spray and water mist suppression within the enclosure, evaporation of water droplets within the enclosure, and water-droplets on an exterior surface of the pipe.

Using the conjugate heat transfer model to model heat transfer from the fluid in the enclosure through the pipe provides a more accurate estimation of the parameter within the pipe. This is in comparison to prior art methods where the pipe may be modelled as a constant or adiabatically.

In an embodiment, prior to providing a model of the enclosure, the pipe, the ignition source, a mesh of a fluid within the enclosure, and the fire suppression system, the method further comprises: providing a model of the pipe, the ignition source, and the mesh of the fluid within a space associated with the enclosure; activating the ignition source; modelling a fire propagating from the ignition source, chemical species mixing within the space associated with the enclosure, and turbulence of the fluid inside the space associated with the enclosure; modelling heat transfer from the fluid in the space associated with the container through the pipe using the conjugate heat transfer model; and identifying, over time, cells of the mesh containing the fire.

By identifying the cells containing the fire, the subsequent method steps of estimating the parameter at the interior of the pipe can be performed more efficiently.

In an embodiment, the computer-implemented method further comprising: determining a temperature gradient between adjacent cells identified as containing the fire; comparing the temperature gradient to a threshold; and splitting the identified cells if the temperature gradient is greater than the threshold. By splitting the identified cells, the simulation can be focused on the areas with the fire, which require more accurate computation, and cells not including the fire can continue as normal since any errors in those cells is unlikely to affect the final result as much.

In an embodiment, modelling the fire propagating from the ignition source uses an Eddy-dissipation model.

In an embodiment, modelling radiation uses a discrete ordinates model.

In an embodiment, modelling soot uses a one-step model

In an embodiment, modelling chemical species uses a multi-species transport and reactions model.

In an embodiment, modelling turbulence of the fluid uses a shear stress transport, SST, k-omega model to capture regions near the container wall.

In an embodiment, modelling water spray and water mist suppression uses a discrete phase model.

In an embodiment, modelling evaporation of water droplets comprises a discrete phase evaporation model.

In an embodiment, modelling water droplets on an exterior surface of the pipe uses a Lagrangian wall-film model.

According to an aspect of the present disclosure, there is provided a computer-implemented method of generating training data for training a neural network model to estimate a physical parameter of an interior of a pipe, wherein the pipe is arranged passing through an enclosure containing an ignition source, the method comprising: iteratively simulating a physical parameter of an interior of a pipe, wherein the pipe is arranged passing through an enclosure containing an ignition source, using computational fluid dynamics, according to any preceding aspect or embodiment, using different positions of the ignition source; associating the different positions of the ignition source with the corresponding simulated changes in the physical parameter; storing the associated different positions of the ignition source and the corresponding simulated changes in the physical parameter as training data.

Generating training data in this way reduces the carbon footprint of the entity training the model because collecting the equivalent set of data empirically would result in unacceptable carbon dioxide, CO2, emissions due to the number of fires that would be needed.

According to an aspect of the present disclosure, there is provided a computer-implemented method of training a neural network model to estimate a physical parameter of an interior of a pipe passing through an enclosure containing an ignition source, the method comprising: obtaining training data using the method of the preceding aspect; inputting the different positions of the ignition source to the neural network model to estimate changes in the physical parameter; calculate a loss between the estimated changes in the physical parameter and the simulated changes in the physical parameter; and adjust weights of the neural network model to reduce the loss.

According to an aspect of the present disclosure, there is provided a computer-implemented method of controlling a fire suppression system, the method comprising: providing the neural network trained using the method of the preceding aspect; detecting a position of a fire in an enclosure using a sensor; estimating a physical parameter at an interior of a pipe passing through the enclosure using the trained neural network; and controlling the fire suppression system based on the estimated physical parameter.

Using a model to control the fire suppression system in this way will result in reduced waste of materials consumed by the fire suppression system, e.g. water, which in some instances may have limited supply.

According to an aspect of the present disclosure, there is provided a transitory, or non-transitory, computer-readable medium, having instructions stored thereon that when executed by at least one processor, causes the at least one processor to perform the computer-implemented method of any preceding aspect or embodiment.

### BRIEF DESCRIPTION OF DRAWINGS

The subject-matter of the present disclosure is best described with reference to the accompanying figures, in which:
Figure 1 shows a block diagram of a computer for implementing various methods according to at least one embodiment;
Figure 2 shows a schematic of a fire in an enclosure;
Figure 3 shows a perspective view of a model of the fire from Figure 2;
Figure 4 shows a cross-section view of the model of the fire from Figure 3;
Figure 5 is a flow chart summarising a computer-implemented method of simulating a physical parameter at an interior of a pipe, wherein the pipe is arranged passing through an enclosure containing an ignition source, using computational fluid dynamics, according to at least one embodiment;
Figure 6 is a flow chart summarising a computer-implemented method of generating training data for training a neural network model to estimate a physical parameter of an interior of a pipe, wherein the pipe is arranged passing through an enclosure containing an ignition source, according to at least one embodiment;
Figure 7 is a flow chart summarising a computer-implemented method of training a neural network model to estimate a physical parameter of an interior of a pipe passing through an enclosure containing an ignition source, according to at least one embodiment;
Figure 8 is a flow chart summarising a computer-implemented method of controlling a fire suppression system, according to at least one embodiment.

### DESCRIPTION OF EMBODIMENTS

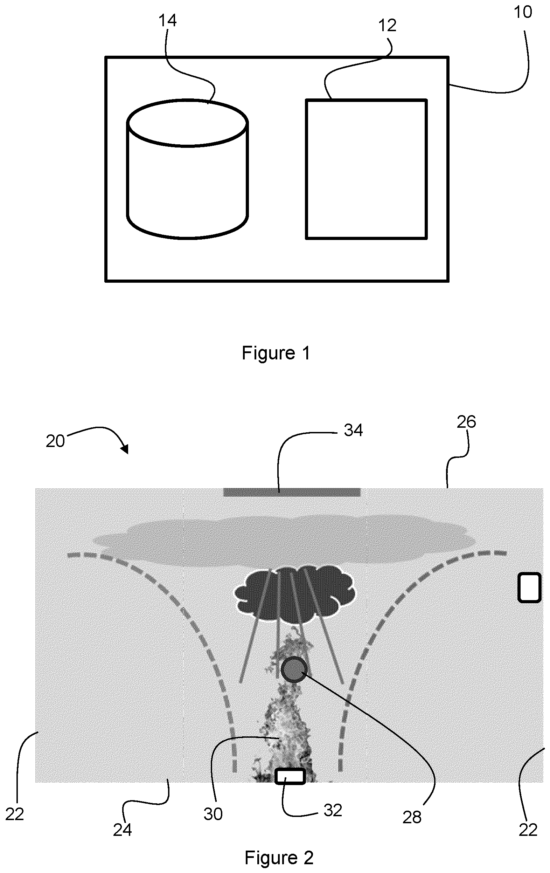

With reference to Figure 1, methods disclosed herein may be implemented on a computer 10, including a processor 12 and storage 14. The storage may be non-transitory computer readable media having instructions stored thereon that, when executed by the processor 12 cause the processor 12 to perform the computer-implemented methods described herein.

With reference to Figure 2, an enclosure 20 may include a plurality of walls 22, e.g. four walls, a floor 24, and a ceiling 26. One or more pipes 28 may pass through the enclosure which contain various fluids. Some fluids contained in pipes may be corrosive, or flammable. It is therefore desirable to suppress any fires 30 that propagate from an ignition source 32 in the enclosure. Fire suppression systems 34 such as a sprinkler system may be employed to suppress fires within such enclosures. To understand when to activate the fire suppression system, it is important to be able to estimate accurately a physical parameter, e.g. temperature, at an interior of the pipe 28.

The enclosure of Figure 2 is a real world enclosure and a simulation model of the enclosure can be provided for simulation purposes.

To simulate the physical parameter at the interior of the pipe, a computational fluid dynamics (CFD) tool, such as ANSYS ^{®} Fluent ^{®} may be used. This may be called the CFD model herein.

Various models are available within the CFD tool. Example models used by this CFD model is an Eddy dissipation model. The Eddy dissipation model may be used to model a fire propagating within a space occupied by the enclosure. Under some combustion conditions, fuels burn quickly and the overall rate of reaction is controlled by turbulent mixing. In high-temperature non-premixed flames, for example, turbulence slowly convects/mixes fuel and oxidizer into the reaction zones where they burn quickly. In certain premixed flames, the turbulence slowly convects/mixes cold reactants and hot products into the reaction zones, where reaction occurs rapidly. In such cases, one approximation is to assume the combustion is mixing-limited, allowing neglect of the complex chemical kinetic rates and instead assuming instantaneous burn upon mixing. For mixed-is-burned approximation, the CFD model provides a turbulence-chemistry interaction model, based on the work of Magnussen and Hjertager, which is the Eddy-dissipation model.

Another model is a discrete ordinates (DO) model. The DO model may be used to model radiation, e.g. heating or cooling of surfaces due to radiation and/or heat sources or sinks due to radiation within the fluid phase. The DO model spans the entire range of optical thicknesses, and allows you to solve problems ranging from surface-to-surface radiation to participating radiation in combustion problems. It also allows the solution of radiation at semi-transparent walls. Computational cost is moderate for typical angular discretizations, and memory requirements are modest.

Another model is a soot model. The soot model may be a one-step model. The one-step model may be a Khan and Greeves model in which the CFD model predicts the rate of soot formation based on an empirical relation.

Another model is a species mixing or species transport model for modelling mixing within the enclosure. The species transport model may be a multi-species transport and reactions model. This model can model the mixing and transport of chemical species by solving conservation equations describing convection, diffusion, and reaction sources for each component species. Multiple simultaneous chemical reactions can be modelled, with reactions occurring in the fluid phase (volumetric equations) and/or on wall or particle surfaces, and in the porous region.

Another model is a turbulence model to model turbulence of the fluid inside the enclosure. The turbulence model may be a Detached Eddy-Simulation (DES) model which also incorporates a shear stress transport (SST) k-omega model near wall regions.

Another model is a water spray and water mist suppression model for modelling water spray and water mist suppression within the enclosure. This model may be a discrete phase model (DPM). In this model, in addition to solving transport equations for the continuous phase, the CFD model allows simulation of a discrete second phase in a Lagrangian frame of reference. This second phase includes spherical particles (which may be taken to represent droplets, or bubbles) dispersed in the continuous phase. The CFD model computes trajectories of these discrete phase entities, as well as heat and mass transfer to/from them. A coupling between the phases and its impact on both the discrete phase trajectories and the continuous phase flow can be included.

Another model is an evaporation model for modelling evaporation of water droplets within the enclosure. This model may be a discrete phase evaporation model. This model may predict a vaporization from a discrete phase droplet.

Another model may be a Lagrangian wall-film model which may model water-droplets on an exterior surface of the pipe. This model may use transient Lagrangian particles to discretize physical effects.

Another model is a heat transfer model for modelling heat transfer between solid and fluid regions, for example, modelling heat transfer from the fluid in the enclosure through the pipe using a conjugate heat transfer model. Another heat transfer model may be a shell conduction model for modelling heat transfer from the fluid in the enclosure to the enclosure itself. For example, the shell conduction model may model heat transfer from the fluid in the enclosure to the walls and ceiling of the enclosure.

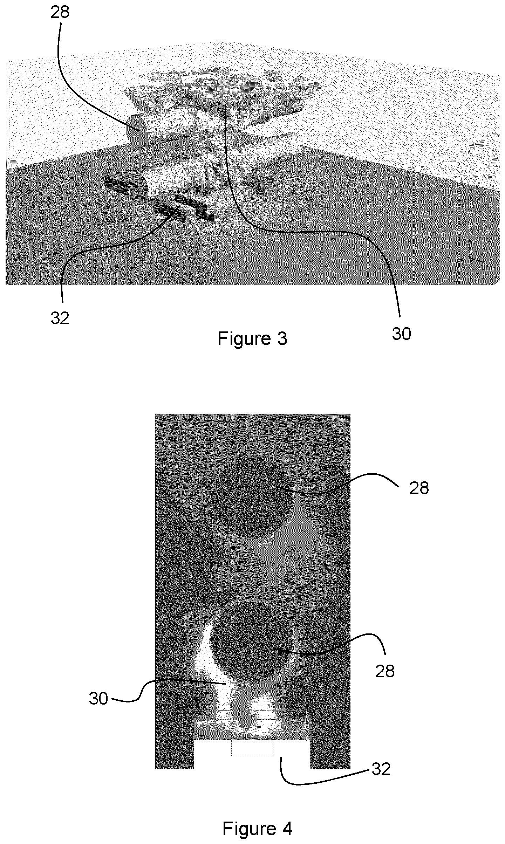

With reference to Figures 3 and 4, a method of simulating a physical parameter at an interior of the pipe 28 may include providing a model of the pipe 28, the ignition source 32, a mesh of a fluid within a space occupied by the enclosure of Figure 2. The physical parameter may be a parameter such as temperature, pressure, etc. However, it is important to note at this stage that a model of the container is not present. In other words, this is an open fire model. Physical parameters are set to initial conditions, e.g. ambient conditions. The ignition source is activated, e.g. turned on. Some of the foregoing models are activated. The activated models are the Eddy dissipation model, the multi-species transport and reactions model, the SST k-omega model, and the conjugate heat transfer model. In this way, the method comprises modelling fire propagating from the ignition source, chemical species mixing within the space associated with the enclosure, and turbulence of the fluid inside the space associated with the enclosure.

Next, the method comprises modelling heat transfer from the fluid in the space associated with the container through the pipe using the conjugate heat transfer model.

The simulation is a steady state simulation. In other words, the simulation reaches steady state values before completion.

The cells of the mesh containing the fire are identified over time, e.g. a simulation period. The method may comprise iteratively adapting the mesh during the source of the steady-state simulation. This may be achieved by, at each step of the simulation, determining a temperature gradient between adjacent cells, e.g. those cells identified as containing a fire. Comparing the temperature gradient to a threshold, and then splitting the identified cells if the temperature gradient is greater than the threshold. In other words, identifying cells containing the fire is passive rather than active and forms part of the cell division process.

Next, once the steady state for the simulation is reached, including the cell splitting, the ignition source is turned off.

Next, the enclosure is instated. In other words, the method comprises providing a model of the enclosure. The simulation is switched from steady state to transient.

The following models are then also activated in addition to those listed above: the discrete ordinates model, the one-step model, and the detached Eddy simulation (DES) model.

The ignition source is then activated. This may be achieved in two steps. Firstly, fuel is introduced without ignition for a few seconds to allow vapour to collect within the oil pan. Without this, there is nothing to ignite. The second step is igniting the ignition source.

The physical parameter at the interior of the pipe is then simulated by modelling a fire propagating from the ignition source, radiation within the enclosure, soot within the enclosure, chemical species mixing within the enclosure, and turbulence of the fluid inside the enclosure, and by modelling heat transfer from the fluid in the enclosure through the pipe using the conjugate heat transfer model.

Next, the following models are also enabled: the discrete phase model, the discrete phase evaporation model, and the Lagrangian wall-film model. These models may also be enabled earlier in the workflow but they are only needed once the fire suppression system is activated.

Next, the fire suppression system is activated. Then, the physical parameter at the interior of the pipe may be simulated over time by additionally modelling water mist suppression within the enclosure, evaporation of water droplets within the enclosure, and water-droplets on an exterior surface of the pipe.

The simulation may be run for ignition sources of various different positions. The corresponding results may be used to train a surrogate model for implementation in controlling a real world fire suppression system. The CFD model would not be suitable for use as a digital twin used for controlling a fire suppression system due to the long running time required for the simulation.

Therefore, the present disclosure also provides a computer-implemented method of generating training data for training a neural network model to estimate a physical parameter of an interior of a pipe as described above. The method comprises: iteratively simulating a physical parameter of an interior of a pipe, wherein the pipe is arranged passing through an enclosure containing an ignition source, using computational fluid dynamics, according to any of the method steps described above, using different positions of the ignition source; associating the different positions of the ignition source with the corresponding simulated physical parameter; storing the associated different positions of the ignition source and the corresponding simulated changes in the physical parameter as training data. In other words, the CFD simulation method may be used to generate physical parameters associated with various positions of ignition sources, and these may be paired as training data.

The present disclosure may also provide a computer-implemented method of training the neural network model to estimate a physical parameter of an interior of the pipe passing through the enclosure. The method comprises obtaining training data as defined above. Then the method comprises inputting the different positions of the ignition source to the neural network model to estimate changes in the physical parameter; calculate a loss between the estimated changes in the physical parameter and the simulated changes in the physical parameter; and adjust weights of the neural network model to reduce the loss. In other words, training the model may be carried out using backpropagation and an optimisation algorithm, such as gradient descent.

This trained neural network model may be used to control the fire suppression system in the real world environment (Figure 2). Therefore, the present disclosure provides a computer-implemented method of controlling a fire suppression system. The method comprises: providing the neural network trained as described above; detecting a position of a fire in an enclosure using a sensor; estimating a physical parameter at an interior of a pipe passing through the enclosure using the trained neural network; and controlling the fire suppression system based on the estimated physical parameter. For example, the sensor may be a temperature sensor which works by estimating a location of the fire based on a temperature measured by the sensor. Alternatively, or in addition, the sensor may be a camera which captures images within the enclosure. A separate neural network model, e.g. a convolutional neural network model (CNN), may be trained to identify a fire and its location within the enclosure.

Controlling the fire suppression system may include providing a signal when to activate the fire suppression system, a spray type of use, e.g. a sprinkler versus a water jet, and a flow rate to use, depending on the estimated physical parameter at an interior of the pipe. It would be appreciated that, depending on what material is within the pipe, the activation of the water suppression system may be changed.

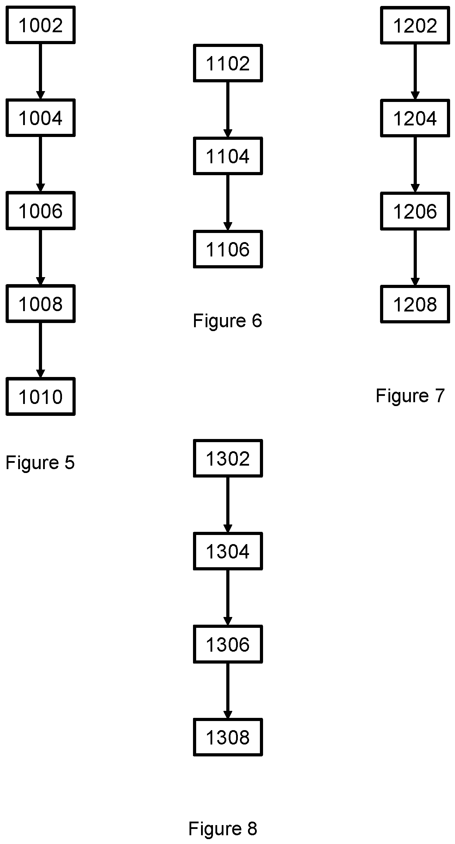

With reference to Figure 5, a computer-implemented method of simulating a physical parameter at an interior of a pipe, wherein the pipe is arranged passing through an enclosure containing an ignition source, using computational fluid dynamics is summarised as comprising: providing (1002) a model of the enclosure, the pipe, the ignition source, a mesh of a fluid within the enclosure, and the fire suppression system; activating (1004) the ignition source; simulating (1006) the physical parameter at the interior of the pipe by modelling a fire propagating from the ignition source, radiation within the enclosure, soot within the enclosure, chemical species mixing within the enclosure, and turbulence of the fluid inside the enclosure, and by modelling heat transfer from the fluid in the enclosure through the pipe using a conjugate heat transfer model; activating (1008) the fire suppression system; and simulating (1010) the physical parameter at the interior of the pipe over time by additionally modelling water spray and water mist suppression within the enclosure, evaporation of water droplets within the enclosure, and water-droplets on an exterior surface of the pipe.

With reference to Figure 6, a computer-implemented method of generating training data for training a neural network model to estimate a physical parameter of an interior of a pipe, wherein the pipe is arranged passing through an enclosure containing an ignition source may be summarised as comprising: iteratively (1102) simulating a physical parameter of an interior of a pipe, wherein the pipe is arranged passing through an enclosure containing an ignition source, using computational fluid dynamics, using different positions of the ignition source; associating (1104) the different positions of the ignition source with the corresponding simulated physical parameter; storing (1106) the associated different positions of the ignition source and the corresponding simulated changes in the physical parameter as training data.

With reference to Figure 7, a computer-implemented method of training a neural network model to estimate a physical parameter of an interior of a pipe passing through an enclosure containing an ignition source may be summarised as comprising: obtaining (1202) training data; inputting (1204) the different positions of the ignition source to the neural network model to estimate the physical parameter; calculate (1206) a loss between the estimated changes in the physical parameter and the simulated physical parameter; and adjust (1208) weights of the neural network model to reduce the loss.

With reference to Figure 8, a computer-implemented method of controlling a fire suppression system may be summarised as comprising: providing (1302) the neural network trained; detecting (1304) a position of a fire in an enclosure using a sensor; estimating (1306) a physical parameter at an interior of a pipe passing through the enclosure using the trained neural network; and controlling (1308) the fire suppression system based on the estimated physical parameter.

## Claims

1. A computer-implemented method of simulating a physical parameter at an interior of a pipe, wherein the pipe is arranged passing through an enclosure containing an ignition source, using computational fluid dynamics, the method comprising:
providing a model of the enclosure, the pipe, the ignition source, a mesh of a fluid within the enclosure, and the fire suppression system;
activating the ignition source;
simulating the physical parameter at the interior of the pipe by modelling a fire propagating from the ignition source, radiation within the enclosure, soot within the enclosure, chemical species mixing within the enclosure, and turbulence of the fluid inside the enclosure, and by modelling heat transfer from the fluid in the enclosure through the pipe using a conjugate heat transfer model;
activating the fire suppression system; and
simulating the physical parameter at the interior of the pipe over time by additionally modelling water spray and water mist suppression within the enclosure, evaporation of water droplets within the enclosure, and water-droplets on an exterior surface of the pipe.

2. The computer-implemented method of Claim 1, wherein prior to providing a model of the enclosure, the pipe, the ignition source, a mesh of a fluid within the enclosure, and the fire suppression system, the method further comprises:
providing a model of the pipe, the ignition source, and the mesh of the fluid within a space associated with the enclosure;
activating the ignition source;
modelling a fire propagating from the ignition source, chemical species mixing within the space associated with the enclosure, and turbulence of the fluid inside the space associated with the enclosure;
modelling heat transfer from the fluid in the space associated with the container through the pipe using the conjugate heat transfer model; and
identifying, over time, cells of the mesh containing the fire.

3. The computer-implemented method of Claim 2, further comprising:
determining a temperature gradient between adjacent cells identified as containing the fire;
comparing the temperature gradient to a threshold; and
splitting the identified cells if the temperature gradient is greater than the threshold.

4. The computer-implemented method of any preceding claim, wherein modelling the fire propagating from the ignition source uses an Eddy-dissipation model.

5. The computer-implemented method of any preceding claim, wherein modelling radiation uses a discrete ordinates model.

6. The computer-implemented method of any preceding claim, wherein modelling soot uses a one-step model

7. The computer-implemented method of any preceding claim, wherein modelling chemical species uses a multi-species transport and reactions model.

8. The computer-implemented method of any preceding claim, wherein modelling turbulence of the fluid uses a shear stress transport, SST, k-omega model to capture regions near the container.

9. The computer-implemented method of any preceding claim, wherein modelling water spray and water mist suppression uses a discrete phase model.

10. The computer-implemented method of any preceding claim, wherein modelling evaporation of water droplets comprises a discrete phase evaporation model.

11. The computer-implemented method of any preceding claim, wherein modelling water droplets on an exterior surface of the pipe uses a Lagrangian wall-film model.

12. A computer-implemented method of generating training data for training a neural network model to estimate a physical parameter of an interior of a pipe, wherein the pipe is arranged passing through an enclosure containing an ignition source, the method comprising:
iteratively simulating a physical parameter of an interior of a pipe, wherein the pipe is arranged passing through an enclosure containing an ignition source, using computational fluid dynamics, according to any preceding claim, using different positions of the ignition source;
associating the different positions of the ignition source with the corresponding simulated the physical parameter;
storing the associated different positions of the ignition source and the corresponding simulated changes in the physical parameter as training data.

13. A computer-implemented method of training a neural network model to estimate a physical parameter of an interior of a pipe passing through an enclosure containing an ignition source, the method comprising:
obtaining training data using the method of Claim 12;
inputting the different positions of the ignition source to the neural network model to estimate the physical parameter;
calculate a loss between the estimated changes in the physical parameter and the simulated the physical parameter; and
adjust weights of the neural network model to reduce the loss.

14. A computer-implemented method of controlling a fire suppression system, the method comprising:
providing the neural network trained using the method of Claim 13;
detecting a position of a fire in an enclosure using a sensor;
estimating a physical parameter at an interior of a pipe passing through the enclosure using the trained neural network; and
controlling the fire suppression system based on the estimated physical parameter.

15. A transitory, or non-transitory, computer-readable medium, having instructions stored thereon that when executed by at least one processor, causes at least one processor to perform the computer-implemented method of any preceding claim.
